# EUROPEAN PATENT SPECIFICATION

(11) **EP 0 399 474 B1**
(45) Date of publication and mention of the grant of the patent: **05.03.1997**
(21) Application number: 90109722.0
(22) Date of filing: 22.05.1990
(51) Int. Cl.: C08L 71/12, C08L 25/04, C08L 51/04

(54) **Molded and plated article molded from a polyphenylene ether resin composition**
Gegossener und plattierter Artikel gegossen aus einer Polyphenylenether enthaltenden Harzzusammensetzung
Article moulé et plaqué moulé à partir d'une composition de résine d'éther polyphénylène

(30) Priority: 23.05.1989 JP 129385/89; 09.08.1989 JP 204601/89
(43) Date of publication of application: 28.11.1990
(73) Proprietor: MITSUBISHI RAYON COMPANY, LTD., Tokyo 104 (JP)
(72) Inventor: Hongo, Masafumi, 20-1, Miyuki-cho, Otake-shi, Hiroshima (JP); Yano, Hideki, 20-1, Miyuki-cho, Otake-shi, Hiroshima (JP); Shigemitsu, Hideyuki, 20-1, Miyuki-cho, Otake-shi, Hiroshima (JP)
(74) Representative: TER MEER - MÜLLER - STEINMEISTER & PARTNER

(56) References cited:
- EP-A- 0 044 703
- EP-A- 0 164 048
- EP-A- 0 259 677
- EP-A- 0 285 969

## Description

The present invention relates to a molded and plated article molded from a thermoplastic resin composition having a superior heat resistance, impact resistance and plating properties.

The polyphenylene ether resin has a superior heat resistance, mechanical properties, and electrical properties, and good properties such as a low water absorption and high dimensional stability. Although this resin has a poor molding processability and impact resistance, these defects are overcome by blending a rubber-reinforced resin such as rubber-reinforced high-impact polystyrene, and such blends are currently widely used.

Almost all polyphenylene ether resin compositions used in the field of plating are formed by blending a polyphenylene ether resin with an ABS resin. Unlike high-impact polystyrene, the ABS resin (AS resin) has a poor compatibility with the polyphenylene ether resin, and therefore, lamellar peeling occurs in the blend.

As the means for overcoming this defect, Japanese Unexamined Patent Publication No. 53-154754 and Japanese Examined Patent Publication No. 63-7580 propose a method comprising blending an AS resin having a low acrylonitrile content with a polyphenylene ether resin, but even according to this proposal, a composition having not only satisfactory plating properties (such as throwing power and adhesion strength) but also impact resistance cannot be obtained.

It has been considered that, to plate a composition by the plating process for ABS resins a vinyl cyanide monomer should be present in the composition, but a copolymer of the vinyl cyanide monomer and an aromatic vinyl monomer or a graft copolymer obtained by grafting the vinyl cyanide monomer and an aromatic vinyl monomer to a rubbery polymer has a poor compatibility with the polyphenylene ether resin, and therefore, lamellar peeling occurs in the blend or the physical properties are lowered.

EP-A-0 259 677 relates to a polyphenylene ether resin composition and discloses that the adherence of a protective and/or decorative paint to polyphenylene ether resins, alone or combined with a high impact strength polystyrene resin, is markedly improved by adding a high impact rubber modified terpolymer resin comprising units of a non-polar aromatic monovinyl compound, such as styrene, a polar monovinyl compound, such as vinyl pyridine, and a diene rubber, such as butadiene.

EP-A-0 164 048 relates to a graft polymer obtained by polymerizing styrene and vinyl pyridine in the presence of a rubber, such as polybutadiene. This graft polymer can be used as a modifier for thermoplastic resin, such as a polyphenylene ether/high-impact polysterene composition.

Under the above-mentioned background, the primary object of the present invention is to provide a molded and plated article molded from a polyphenylene ether resin composition having a superior heat resistance, impact resistance, and molding processability, capable of being plated by a broadly adopted plating process for ABS resins without using a special plating process heretofore used exclusively for polyphenylene ether resins, and having good plating properties.

As a result of detailed research, the inventors found that if a copolymer of an aromatic vinyl monomer with a heterocyclic compound having a vinyl group and containing nitrogen as the hetero atom is incorporated together with a graft copolymer obtained by polymerizing an aromatic vinyl monomer, optionally with other vinyl monomer copolymerizable therewith, in the presence of a butadiene type rubbery polymer, into a polyphenylene ether resin, little lamellar peeling or reduction of the physical properties occurs and the plating properties are greatly improved.

More specifically, in accordance with the present invention, there is provided a molded and plated article molded from a thermoplastic resin composition comprising (A) 10 to 60 parts by weight of a polyphenylene ether resin, (B) 20 to 70 parts by weight of at least one member selected from the group consisting of (b-1) an aromatic vinyl resin and (b-2) a copolymer of an aromatic vinyl monomer with a heterocyclic compound having a vinyl group and containing nitrogen as the hetero atom, and (C) 10 to 60 parts by weight of at least one member selected from the group consisting of (c-1) a graft copolymer obtained by polymerizing an aromatic vinyl monomer, optionally with other vinyl monomer copolymerizable therewith, in the presence of a butadiene type rubbery polymer and (c-2) a graft copolymer obtained by polymerizing an aromatic vinyl monomer and a heterocyclic compound having a vinyl group and containing nitrogen as the hetero atom, optionally with other ethylenically unsaturated compound copolymerizable therewith, in the presence of a butadiene type rubbery polymer, wherein at least one of the components (B) and (C) is a polymer of the nitrogen-containing heterocyclic compound, and the total amount of the components (A), (B) and (C) is 100 parts by weight.

In the present invention, as the polyphenylene ether resin (A), there can be used a polymer having recurring units represented by the following general formula (I): 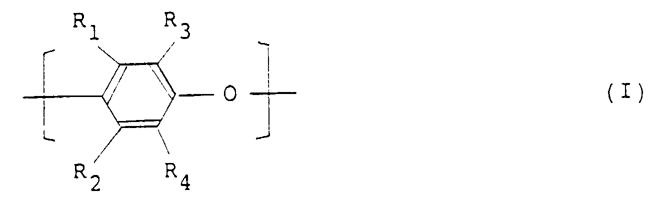 wherein R₁ , R₂ , R₃ and R₄ , which may be the same or different, represent an alkyl group having 1 to 4 carbon atoms, excluding a tert.-butyl group, an aryl group having 6 to 10 carbon atoms, a halogen atom, a hydrogen atom, a nitro group or an amino group,
and a styrene-grafted polyphenylene ether.

Typical examples of the polyphenylene ether homopolymer include poly(2,6-dimethyl-1,4-phenylene) ether, poly(2-methyl-6-ethyl-1,4-phenylene) ether, poly(2,6-diethyl-1,4-phenylene) ether, poly(2-methyl-6-chloro-1,4-phenylene) ether, poly(2-methyl-6-hydroxyethyl-1,4-phenylene) ether, and poly(2-methyl-6-chloroethyl-1,4-phenylene) ether.

The amount of the polyphenylene ether resin (A) incorporated is 10 to 60 parts by weight, preferably 20 to 45 parts by weight, per 100 parts by weight of the sum of the three components (A), (B) and (C). If the amount of the polyphenylene ether resin is smaller than 10 parts by weight, the heat resistance is lowered, and if the amount of the polyphenylene ether is larger than 60 parts by weight, the moldability and plating properties become poor.

The aromatic vinyl resin (b-1) used as a component (B) is a polymer having recurring units represented by the following formula (II) 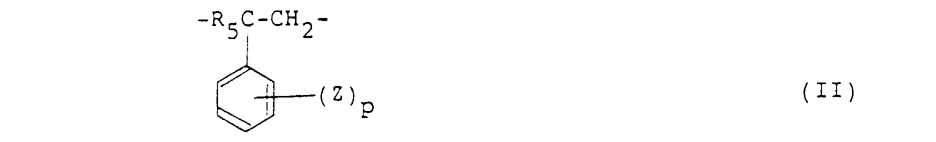 wherein R₅ represents a hydrogen atom or an alkyl group having 1 to 4 carbon atoms, Z represents a hydrogen atom, a halogen atom or an alkyl group having 1 to 4 carbon atoms, and p is an integer of from 1 to 5.

As typical instances, there can be mentioned homopolymers and copolymers of styrene, α-methylstyrene, vinyltoluene, vinylethylbenzene, vinylxylene, tert.-butylstyrene and chlorostyrene. Furthermore, rubber-reinforced high-impact polystyrene can be mentioned. Of the foregoing resins, polystyrene and high-impact polystyrene are preferably used.

As the aromatic vinyl monomer used for the copolymer (b-2) as a component (B) of the present invention, there can be mentioned aromatic vinyl monomers providing a polymer having recurring units represented by the above formula (II), which include, for example, styrene, α-methylstyrene, chlorostyrene and vinyltoluene.

As the heterocyclic compound having a vinyl group and containing nitrogen as the hetero atom for the copolymer (b-2), there can be mentioned vinylpyridine, vinylimidazole, vinylquinoline, and vinylpyrazine. Vinylpyridine is most preferably used. The copolymerization ratio of the aromatic vinyl monomer to the heterocyclic compound is preferably from 95/5 to 65/35 by weight.

Other copolymerizable vinyl monomers can be further copolymerized with the aromatic vinyl monomer and the heterocyclic compound according to need.

The amount of the component (B) incorporated is 20 to 70 parts by weight and preferably 30 to 60 parts by weight per 100 parts by weight of the sum of the three components (A), (B), and (C). If the amount of the component (B) is smaller than 20 parts by weight, the moldability becomes poor, and if the amount of the component (B) is larger than 70 parts by weight, the heat resistance is lowered.

The amount of the copolymer (b-2) per 100 parts by weight of the thermoplastic resin composition depends on the amount of the copolymer (c-2), but when the thermoplastic resin composition not containing the copolymer (c-2), if the amount of the copolymer (b-2) is smaller than 20 parts by weight, the throwing power at the plating step is degraded.

A butadiene copolymer comprising at least 50% by weight of butadiene and not more than 50% by weight of an ethylenically unsaturated monomer such as an acrylic acid ester, styrene, or acrylonitrile, or an organo-siloxane is used as the butadiene type rubbery polymer for the preparation of the graft copolymer (C) of the present invention. As typical instances, there can be mentioned polybutadiene, a styrene/butadiene copolymer, and a butadiene/butyl acrylate composite copolymer.

The amount of the rubbery polymer in the graft copolymer is not particularly critical, but preferably, the amount of the rubbery polymer is at least 30% by weight based on the weight of the graft copolymer (C). If the amount of the rubbery polymer is smaller than 30% by weight, the proportion of the aromatic vinyl polymer is increased and the heat resistance of the composition becomes lower.

As the aromatic vinyl monomer used for the preparation of the graft copolymers (c-1) and (c-2), there can be mentioned aromatic vinyl monomers providing a polymer having recurring units represented by the above formula (II), which include, for example, styrene and α-methylstyrene. As the copolymerizable ethylenically unsaturated monomer, there can be mentioned methacrylic acid esters such as methyl methacrylate and ethyl methacrylate, acrylic acid esters such as methyl acrylate, ethyl acrylate, and butyl acrylate, maleimide derivatives such as N-phenylmaleimide and N-cyclohexylmaleimide, vinyl cyanide monomers such as acrylonitrile and methacrylonitrile, and vinyl group-containing nitrogen bases such as vinylpyridine, vinylimidazole, acrylamide, and methacrylamide.

As the heterocyclic compound having a vinyl group and containing nitrogen as the hetero atom, which is used as the monomer to be grafted for the preparation of the copolymer (c-2) in the present invention, there can be mentioned 2-vinylpyridine, 4-vinylpyridine, vinylimidazole, vinylquinoline, and vinylpyrazine. Among the above, vinylpyridine is most preferably used.

If the amount of the above-mentioned vinyl group-containing heterocyclic compound used for the graft polymerization is smaller than 10% by weight based on all of the monomers used for the grafting, the throwing power at the plating step is poor, and if the amount of this monomer is larger than 50% by weight, the impact resistance is lowered. If the amount of the aromatic vinyl monomer is smaller than 30% by weight based on all of the monomers used for grafting the moldability and impact resistance become poor, and if the amount of the aromatic vinyl monomer is larger than 90% by weight, the throwing power at the plating step is lowered.

The graft copolymer (C) used in the present invention can be prepared by any of emulsion polymerization tion, suspension polymerization, and bulk polymerization.

The graft polymerization can be conducted in one stage or in a plurality of stages. Especially, if a process is adopted in which the monomer containing a nitrogen base, which is necessary for improving the throwing power at the plating step, is polymerized at the first stage and the aromatic vinyl monomer having a particularly good compatibility with the polyphenylene ether is polymerized at the second stage, the throwing power at the plating step is improved, and furthermore, the compatibility of the graft copolymer (C) with the polyphenylene ether (A) and the aromatic vinyl resin is further improved. In this case, moreover, a composition having a superior impact resistance and plating properties to those of the composition comprising the copolymer obtained by one-stage graft polymerization is obtained.

The amount of the graft copolymer (C) incorporated is 10 to 60 parts by weight, preferably 15 to 50 parts by weight, per 100 parts by weight of the thermoplastic resin composition of the present invention. If the amount of the graft copolymer (C) incorporated is smaller than 10 parts by weight, the plating properties and impact resistance become poor, and if the amount of the graft copolymer (C) is larger than 60 parts by weight, the heat resistance is lowered. Especially, in the case of the thermoplastic resin composition free of the copolymer (b-2), if the amount of the copolymer (c-2) incorporated is smaller than 10% by weight, the throwing power at the plating step is lowered.

Any known process can be used for the preparation of the composition of the present invention, and preferably a process is adopted in which the components (A) through (C) are preliminarily weighed and mixed and the mixture is melt-kneaded by a single-screw or twin-screw extruder. A phenol type stabilizer, a phosphorus or halogen type flame retardant, a known foaming agent, a dye or pigment, and a fibrous, spherical, scaly or indeterminate filler can be incorporated into the composition of the present invention according to need.

The present invention will now be described in detail with reference to the following examples.

In the following examples and comparative examples, all of "parts" and "%" are by weight.

The tests were carried out according to the following methods.
(1) Izod impact strength
   Notched test piece having a thickness of 0.635 cm (1/4 inch), ASTM D-256 (kg·cm/cm)
(2) HDT (°C)
   Thickness of 0.635 cm (1/4 inch), load of 18.6 kg/cm², ASTM D-648
(3) Plating adhesion strength (kg/cm)
   A plate (5.0 mm x 8.0 mm x 0.3 mm) molded at a mold temperature of 80°C, a minimum injection rate and a cylinder temperature of 270°C (resin temperature = 278°C) was plated under conditions described below. A notch with a width of 2.5 cm was formed in the formed plating film, and the force required for peeling the film by pulling the film in the vertical direction was determined and converted to a value per cm of the width The obtained value was designated as the adhesion strength.
(5) Throwing power at plating step
   The sample was immersed in an electroless nickel plating solution for 5 minutes, and the throwing power was evaluated. The mark "A" indicates the case where the metal was deposited on the entire surface of the molded article, the mark "B" indicates the case where the metal was partially deposited, and the mark "C" indicates the case where the metal was not deposited at all.
   Plating conditions
   Cleaning with surfactant: 60°C, 15 minutes
   Etching (CrO₃ 400 g/l, H₂SO₄ 200 ml/l): 60°C, 15 minutes
   Acid treatment (HCl, 10% by volume): room temperature, 1 minute
   Catalyzer (Catalyst A-30 supplied by Okuno Seiyaku): 20°C, 2 minutes
   Accelerator (H₂SO₄ , 10% by volume): 40°C, 3 minutes
   Electroless nickel plating (TMP Chemical Nickel supplied by Okuno Seiyaku): 35°C, 5 minutes
   Electric copper plating (copper sulfate 200 g/l, H₂SO₄ 50 g/l, brightening agent): 20°C, current density of 4 A/dm², 60 minutes
   Baking: 80°C, 2 hours

Samples were plated under the above conditions customarily adopted for ABS resins and naturally cooled for 1 hour, and the adhesion strength then measured.
(1) Preparation of copolymer (b-2-I)
   To 200 parts of distilled water were added 2.0 parts of a sodium dodecylbenzene-sulfonate emulsifier, 0.5 part of Rongalit, 0.003 part of ferrous sulfate, and 0.01 part of disodium ethylenediamine-tetraacetate, the temperature was elevated to 60°C, and a mixture of 90 parts of styrene, 10 parts of 2-vinylpyridine, 0.4 part of cumene hydroperoxide, and 0.1 part of tert-dodecylmercaptan was continuously added dropwise over a period of 120 minutes. After termination of the dropwise addition, the temperature was elevated to 70°C, the mixture was maintained at this temperature for 1 hour, and the reaction mixture then cooled.
   The obtained latex was coagulated with magnesium sulfate, washed, filtered, and dried.
(2) Preparation of copolymers (b-2-II) through (b-2-IV)
   These copolymers were prepared in the same manner as adopted for the preparation of the copolymer (b-2-I) except that the monomer composition was changed as shown in Table 1.
(3) Preparation of graft copolymer (c-1-I)
   To 70 parts (as solids) of a polybutadiene latex having a solid content of 33% and an average particle diameter of 0.08 µm was added 2 parts of a copolymer latex having an average particle diameter of 0.08 µm and comprising 85% of n-butyl acrylate units and 15% of methacrylic acid units, with stirring, and the mixture was stirred for 30 minutes to obtain an agglomerated rubber latex having an average particle diameter of 0.28 µm. Then 50 parts of distilled water, 2.0 parts of a potassium oleate emulsifier, 0.2 part of a naphthalene-sulfonic acid/formalin condensate (Demol N supplied by Kao), 0.02 part of sodium hydroxide, and 0.35 part of dextrose were added, with stirring, to the obtained agglomerated latex, the temperature was elevated, and at an inner temperature of 70°C, 0.05 part of ferrous sulfate, 0.2 part of sodium pyrophosphate, and 0.03 part of sodium dithionite were added to the mixture. Immediately, a liquid mixture comprising 30 parts of styrene and 0.3 part of cumene hydroperoxide was continuously added dropwise to the mixture over a period of 120 minutes After termination of the dropwise addition, the mixture was maintained at the above temperature for 1 hour and then cooled.
   The obtained graft copolymer latex was coagulated with dilute sulfuric acid, washed, filtered, and dried.
(4) Preparation of graft copolymers (c-1-II) and (c-1-III)
   These copolymers were prepared in the same manner as adopted for the preparation of the copolymer (c-1-I) except that the amounts of the polybutadiene latex and monomers to be grafted were changed as shown in Table 1.
(5) Preparation of graft copolymer (c-2-I)
   To 60 parts (as solids) of a polybutadiene latex having a solid content of 33% and an average particle diameter of 0.08 µm was added 2 parts of a copolymer latex having an average particle diameter of 0.08 µm and comprising 85% of n-butyl acrylate units and 15% of methacrylic acid units with stirring, and the mixture was stirred for 30 minutes to obtain an agglomerated rubber latex having an average particle diameter of 0.28 µm. Then 50 parts of distilled water, 2.0 parts of a potassium oleate emulsifier, 0.2 part of a naphthalene-sulfonic acid/formalin condensate (Demol N supplied by Kao), 0.02 part of sodium hydroxide, and 0.35 part of dextrose were added, with stirring, to the obtained agglomerated latex, the temperature was elevated and at an inner temperature of 70°C, 0.05 part of ferrous sulfate, 0.2 part of sodium pyrophosphate, and 0.03 part of sodium dithionite were added to the mixture. Immediately, a liquid mixture comprising 5 parts of 2-vinylpyridine, 15 parts of styrene, and 0.25 part of cumene hydroperoxide was continuously added dropwise to the mixture over a period of 90 minutes. After termination of the dropwise addition, the mixture was maintained at the above temperature for 1 hour and then cooled.
   The obtained graft copolymer latex was coagulated with dilute sulfuric acid, washed, filtered, and dried.
(6) Preparation of graft copolymer (c-2-II)
   This graft copolymer was prepared in the same manner as adopted for the preparation of the graft copolymer (c-2-I) except that the monomers to be grafted were added in the amounts shown in Table 1 to 70 parts (as solids) of the polybutadiene latex.
(7) Preparation of graft copolymer (c-2-III)
   To 50 parts (as solids) of a polybutadiene latex having a solid content of 50% and an average particle diameter of 0.26 µm were added 90 parts of distilled water, 2.0 parts of a potassium oleate emulsifier, 0.2 part of Demol N, 0.02 part of sodium hydroxide, and 0.35 part of dextrose with stirring, the temperature was elevated to 60°C, and at an inner temperature of 60°C, 0.05 part of ferrous sulfate and 0.2 part of sodium pyrophosphate were added to the mixture. Subsequently, a liquid mixture comprising 25 parts of 2-vinylpyridine, 37.5 parts of styrene, and 0.63 part of cumene hydroperoxide was continuously added dropwise to the mixture over a period of 200 minutes, and the mixture was maintained at the above temperature for 1 hour and then cooled. The obtained latex was coagulated with dilute sulfuric acid, washed, filtered, and dried.
(8) Preparation of graft copolymers (c-2-IV) through (c-2-VIII)
   These copolymers were prepared in the same manner as adopted for the preparation of the graft copolymer (c-2-I) except that the amounts of the polybutadiene latex and the monomers to be grafted were changed as shown in Table 1.

### Examples 1 through 10 and Comparative Examples 1 through 9

The above-mentioned graft copolymers were weighed and mixed at the ratios shown in Table 1, and the mixture was melt-kneaded at a cylinder temperature of 280°C by using a twin-screw extruder having a screw diameter of 30 mm and pelletized to obtain a composition of the present invention. Test pieces for the evaluation tests were molded from the obtained composition at a cylinder temperature of 270°C and a mold temperature of 80°C by an injection molding machine (Yamashiro Injection Molding Machine SAV-30-30A), and these test pieces were evaluated. The results are shown in Table 1.

A (2,6-dimethyl-1,4-phenylene) ether polymer having a reduced viscosity (ηsp/c) of 0.59 dl/g as measured at 25°C with respect to a 0.1% solution in chloroform by using a Ubbellohde viscometer was used as the polyphenylene ether resin (A).

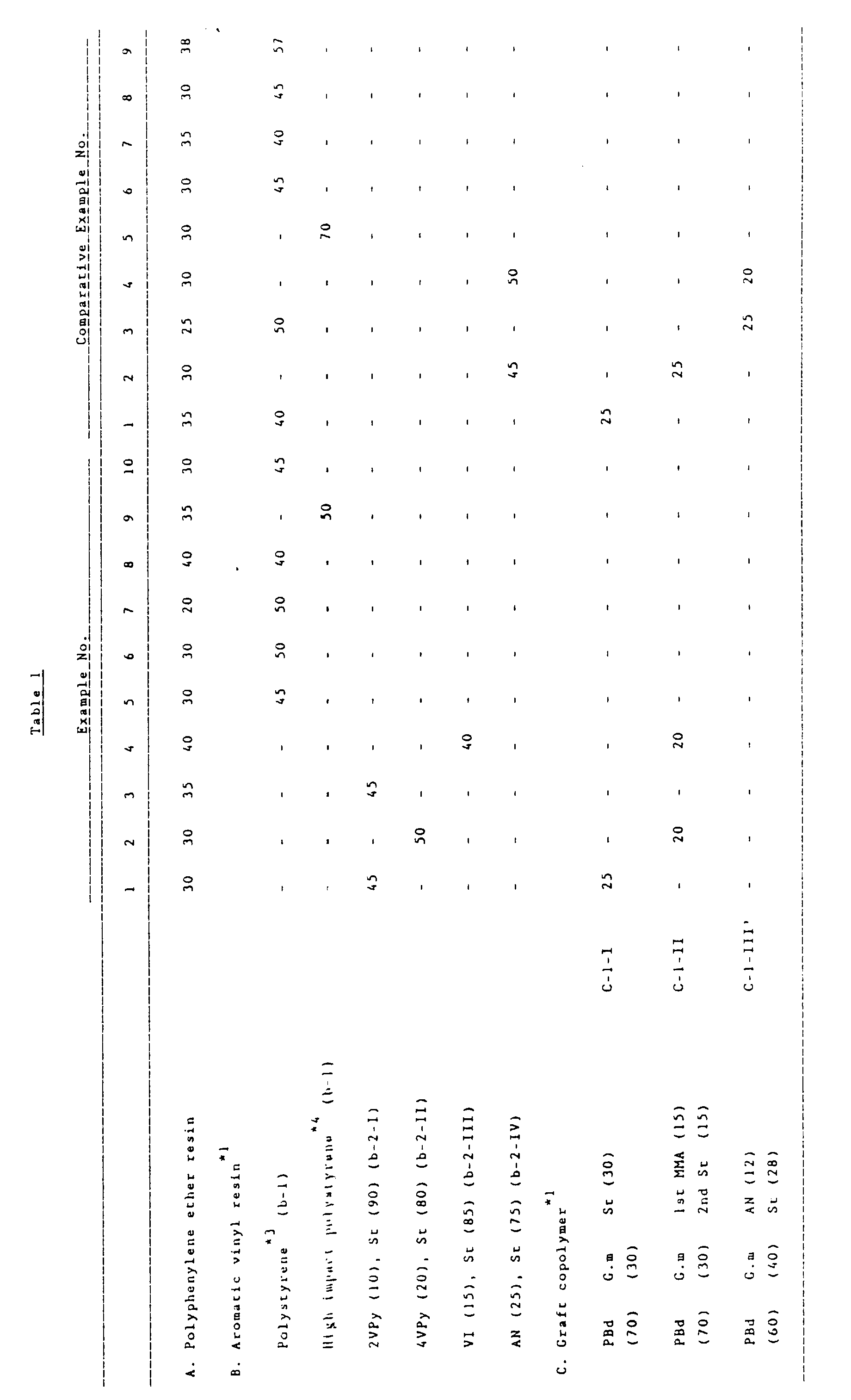

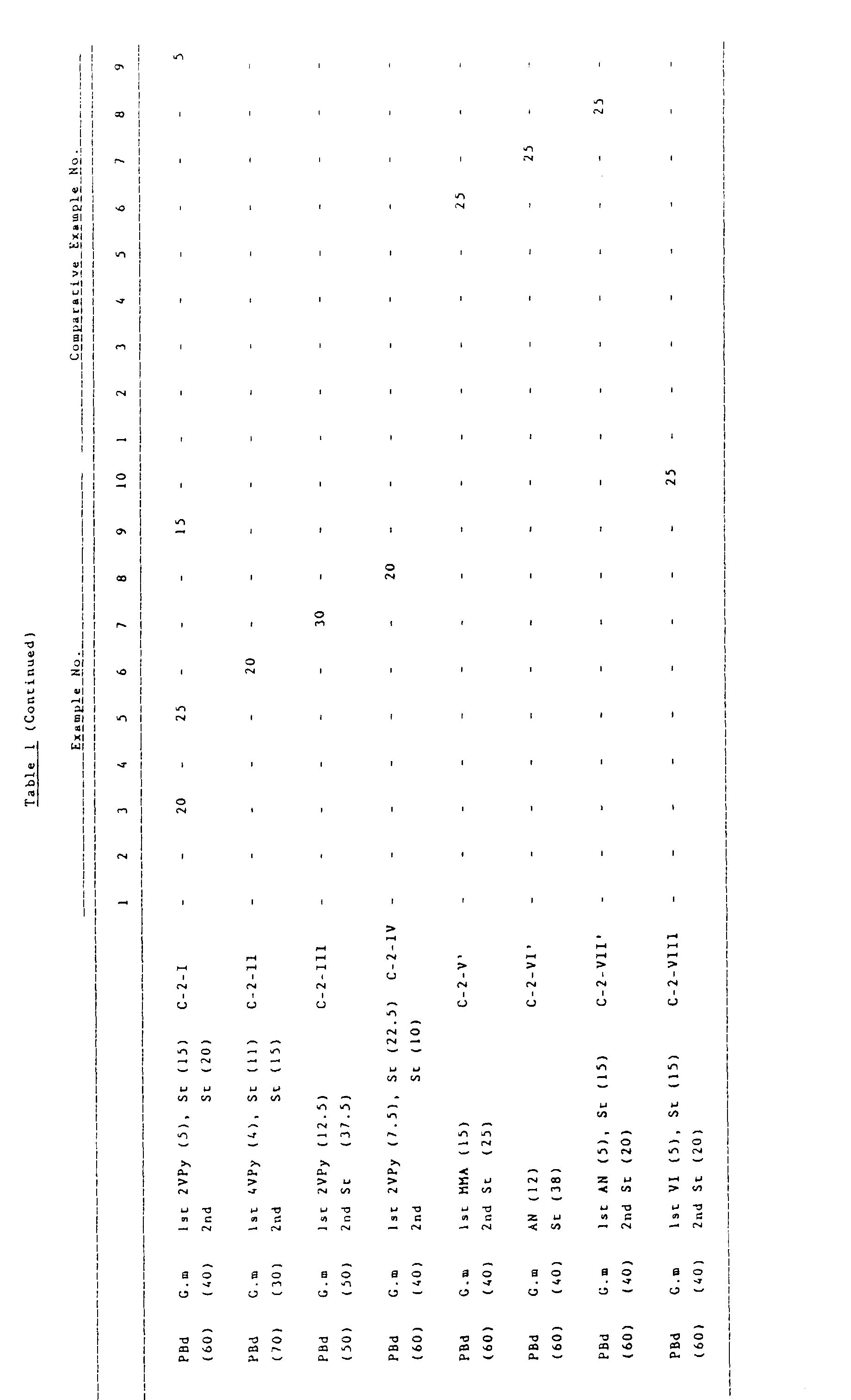

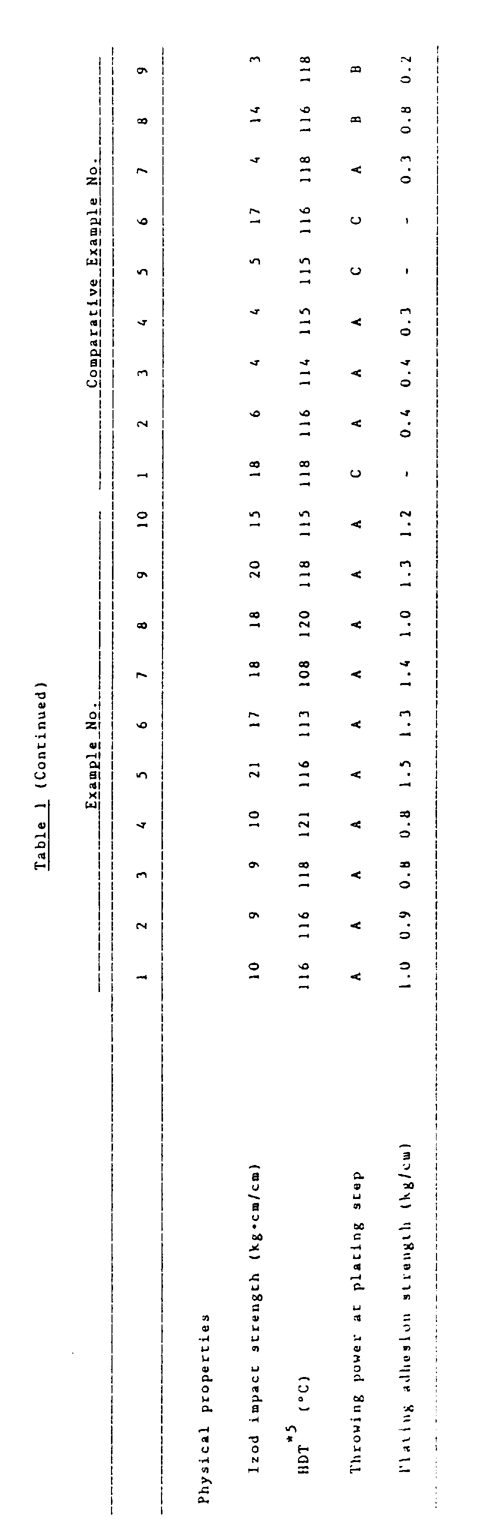

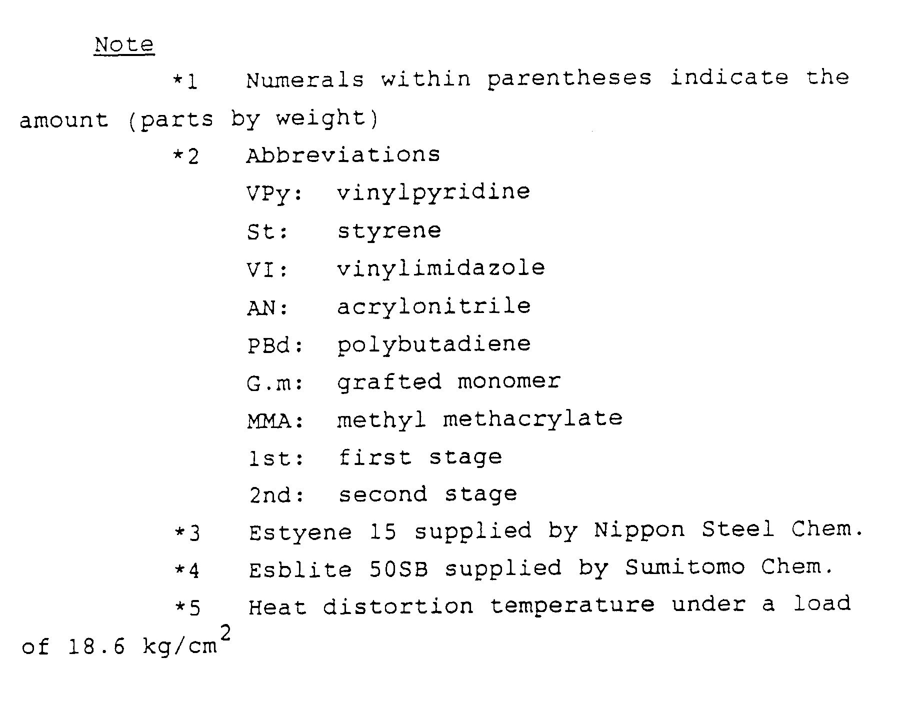

## Claims

1. A molded and plated article molded from a thermoplastic resin composition comprising (A) 10 to 60 parts by weight of a polyphenylene ether resin, (B) 20 to 70 parts by weight of at least one member selected from the group consisting of (b-1) an aromatic vinyl resin and (b-2) a copolymer of an aromatic vinyl monomer with a heterocyclic compound having a vinyl group and containing nitrogen as the hetero atom. and (C) 10 to 60 parts by weight of at least one graft copolymer selected from the group consisting of (c-1) a graft copolymer obtained by polymerizing an aromatic vinyl monomer, optionally with other vinyl monomer copolymerizable therewith, in the presence of a butadiene type rubbery polymer and (c-2) a graft copolymer obtained by polymerizing an aromatic vinyl monomer and a heterocyclic compound having a vinyl group and containing nitrogen as the hetero atom, optionally with other ethylenically unsaturated compound copolymerizable therewith, in the presence of a butadiene type rubbery polymer, wherein at least one of the components (B) and (C) is a polymer of the nitrogen-containing heterocyclic compound, and the total amount of the components (A), (B) and (C) is 100 parts by weight.

2. The molded and plated article according to claim 1 wherein the polyphenylene ether resin is a polymer selected from the group consisting of a polymer having recurring units represented by the following general formula: 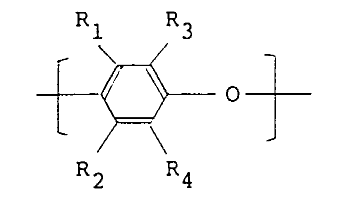 wherein R₁ , R₂ , R₃ and R₄ , which may be the same or different, represent an alkyl group having 1 to 4 carbon atoms, excluding a tert.-butyl group, an aryl group having 6 to 10 carbon atoms, a halogen atom, a hydrogen atom, a nitro group or an amino group,
and a styrene-grafted polyphenylene ether.

3. The molded and plated article according to claim 1 wherein the amount of the polyphenylene ether resin (A) is 20 to 45 parts by weight per 100 parts by weight of the sum of the three components (A), (B), and (C).

4. The molded and plated article according to claim 1 wherein the graft copolymer (C) is the graft copolymer (c-2) comprising the nitrogen-containing heterocyclic compound.

5. The molded and plated article according to claim 1 wherein the aromatic vinyl resin (B) is the aromatic vinyl resin (b-1) free of the nitrogen-containing heterocyclic compound and the graft copolymer (C) is the graft copolymer (c-2) comprising the nitrogen-containing heterocyclic compound.

6. The molded and plated article according to claim 1 wherein the aromatic vinyl resin (b-1) is a polymer having recurring units represented by the following formula: 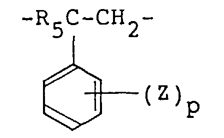 wherein R₅ represents a hydrogen atom or an alkyl group having 1 to 4 carbon atoms, Z represents a hydrogen atom, a halogen atom or an alkyl group having 1 to 4 carbon atoms, and p is an integer of from 1 to 5.

7. The molded and plated article according to claim 1 wherein the copolymer (b-2) is a copolymer of 65 to 95% by weight of an aromatic vinyl monomer represented by the formula: 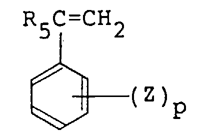 wherein R₅ represents a hydrogen atom or an alkyl group having 1 to 4 carbon atoms, Z represents a hydrogen atom, a halogen atom or an alkyl group having 1 to 4 carbon atoms, and p is an integer of from 1 to 5,
with 5 to 35% by weight of a heterocyclic compound selected from vinylpyridine, vinylimidazole, vinylquinoline and vinylpyrazine.

8. The molded and plated articles according to claim 1 wherein the amount of the component (B) is 30 to 60 parts by weight per 100 parts by weight of the sum of the three components (A), (B), and (C).

9. The molded and plated article according to claim 1 wherein the butadiene type rubbery polymer used for the preparation of the graft copolymer (C) is a copolymer of at least 50% by weight of butadiene and not more than 50% by weight of an ethylenically unsaturated monomer or an organosiloxane.

10. The molded and plated article according to claim 1 wherein the amount of the butadiene type rubbery polymer is at least 30% by weight based on the weight of the graft copolymer (C).

11. The molded and plated article according to claim 1 wherein the aromatic vinyl monomer used for the preparation of the graft copolymer (C) is represented by the formula: 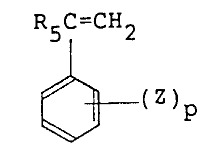 wherein R₅ represents a hydrogen atom or an alkyl group having 1 to 4 carbon atoms, Z represents a hydrogen atom, a halogen atom or an alkyl group having 1 to 4 carbon atoms, and p is an integer of from 1 to 5.

12. The molded and plated article according to claim 1 wherein the amounts of the aromatic vinyl monomer and the heterocyclic compound used for the preparation of the graft copolymer (c-2) are 30 to 90% by weight and 10 to 50% by weight, respectively, based on the total amount of the monomers to be grafted onto the butadiene type rubbery polymer.

13. The molded and plated article according to claim 12 wherein the graft copolymer (c-2) is obtained by polymerizing first the heterocyclic compound and then the aromatic vinyl monomer.

14. The molded and plated article according to claim 1 wherein the amount of the graft copolymer (C) is 15 to 50 parts by weight per 100 parts by weight of the sum of the three components (A), (B), and (C).

## Patentansprüche

1. Geformter und elektrochemisch beschichteter Gegenstand. der aus einer thermoplastischen Harzzusammensetzung geformt worden ist, die (A) 10 bis 60 Gew.-Teile eines Polyphenylenetherharzes, (B) 20 bis 70 Gew.-Teile mindestens eines Vertreters, gewählt aus der (b-1) ein aromatisches Vinylharz und (b-2) ein Copolymer aus einem aromatischen Vinylmonomer mit einer heterocyclischen Verbindung, die eine Vinylgruppe aufweist und Stickstoff als Heteroatom enthält, umfassenden Gruppe, und (C) 10 bis 60 Gew.-Teile mindestens eines Pfropfcopolymeren umfaßt, gewählt aus der (c-1) ein durch Polymerisieren eines aromatischen Vinylmonomeren, wahlweise mit anderen damit copolymerisierbaren Monomeren, in Gegenwart eines kautschukartigen Polymeren vom Butadien-Typ erhaltenes Pfropfcopolymer, und (c-2) ein durch Polymerisieren eines aromatischen Vinylmonomeren und einer heterocyclischen Verbindung, die eine Vinylgruppe aufweist und Stickstoff als Heteroatom enthält, wahlweise mit einer weiteren ethylenisch ungesättigten, damit copolymerisierbaren Verbindung, in Gegenwart eines kautschukartigen Polymeren vom Butadien-Typ erhaltenes Pfropfcopolymer, umfassenden Gruppe, wobei mindestens eine der Komponenten (B) und (C) ein Polymer der stickstoffhaltigen heterocyclischen Verbindung ist, und wobei die Gesamtmenge der Komponenten (A), (B) und (C) 100 Gew.-Teile beträgt.

2. Geformter und elektrochemisch beschichteter Gegenstand nach Anspruch 1, wobei das Polyphenylenetherharz ein Polymer ist, gewählt aus der ein Polymer mit wiederkehrenden Einheiten der folgenden allgemeinen Formel: 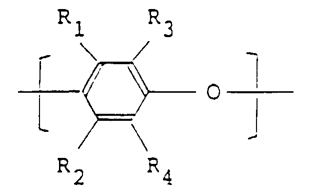 worin R₁, R₂, R₃ und R₄, welche gleich oder verschieden sein können, eine Alkylgruppe mit 1 bis 4 Kohlenstoffatomen, ausschließlich einer tert.-Butylgruppe, eine Arylgruppe mit 6 bis 10 Kohelnstoffatomen, ein Halogenatom, ein Wasserstoffatom, eine Nitrogruppe oder eine Aminogruppe bedeuten,
und einen Styrol-gepfropften Polyphenylenether umfassenden Gruppe.

3. Geformter und elektrochemisch beschichteter Gegenstand nach Anspruch 1, wobei die Menge des Polyphenylenetherharzes (A) 20 bis 45 Gew.-Teile pro 100 Gew.-Teile der Summe aus den drei Komponenten (A), (B) und (C) beträgt.

4. Geformter und elektrochemisch beschichteter Gegenstand nach Anspruch 1, wobei das Pfropfcopolymer (C) das Pfropfcopolymer (c-2) ist, welches die stickstoffhaltige heterocyclische Verbindung umfaßt.

5. Geformter und elektrochemisch beschichteter Gegenstand nach Anspruch 1, wobei das aromatische Vinylharz (B) das aromatische Vinylharz (b-1) ist, das frei an der stickstoffhaltigen heterocyclischen Verbindung ist, und das Pfropfcopolymer (C) das Pfropfcopolymer (c-2) ist, das die stickstoffhaltige heterocyclische Verbindung umfaßt.

6. Geformter und elektrochemisch beschichteter Gegenstand nach Anspruch 1, wobei das aromatische Vinylharz (b-1) ein Polymer mit wiederkehrenden Einheiten der folgenden Formel ist: 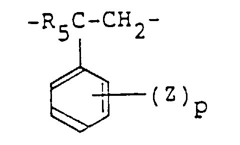 worin R₅ ein Wasserstoffatom oder eine Alkylgruppe mit 1 bis 4 Kohlenstoffatomen bedeutet, Z ein Wasserstoffatom, Halogenatom oder eine Alkygruppe mit 1 bis 4 Kohlenstoffatomen bedeutet, und p eine ganze Zahl von 1 bis 5 ist.

7. Geformter und elektrochemisch beschichteter Gegenstand nach Anspruch 1, wobei das Copolymer (b-2) ein Copolymer aus 65 bis 95 Gew.-% eines aromatischen Vinylmonomeren der Formel: 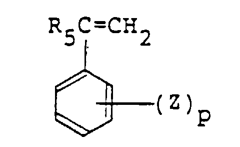 worin R₅ ein Wasserstoffatom oder eine Alkylgruppe mit 1 bis 4 Kohlenstoffatomen bedeutet, Z ein Wasserstoffatom, Halogenatom oder eine Alkylgruppe mit 1 bis 4 Kohlenstoffatomen bedeutet, und p eine ganze Zahl von 1 bis 5 ist, mit 5 bis 35 Gew.-% einer heterocyclischen Verbindung, gewählt aus Vinylpyridin, Vinylimidazol, Vinylchinolin und Vinylpyrazin, ist.

8. Geformter und elektrochemisch beschichteter Gegenstand nach Anspruch 1, wobei die Menge der Komponente (B) 30 bis 60 Gew.-Teile pro 100 Gew.-Teile der Summe der drei Komponenten (A), (B) und (C) beträgt.

9. Geformter und elektrochemisch beschichteter Gegenstand nach Anspruch 1, wobei das zur Herstellung des Pfropfcopolymeren (C) verwendete kautschukartige Polymer vom Butadien-Typ ein Copolymer aus mindestens 50 Gew.-% Butadien und nicht mehr als 50 Gew.-% eines ethylenisch ungesättigten Monomeren oder ein Organosiloxan ist.

10. Geformter und elektrochemisch beschichteter Gegenstand nach Anspruch 1, wobei die Menge des kautschukartigen Polymeren vom Butadien-Typ mindestens 30 Gew.-% beträgt, bezogen auf das Gewicht des Pfropfcopolymeren (C).

11. Geformter und elektrochemisch beschichteter Gegenstand nach Anspruch 1, wobei das zur Herstellung des Pfropfcopolymeren (C) verwendete aromatische Vinylmonomer der Formel: 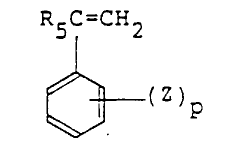 entspricht, worin R₅ ein Wasserstoffatom oder eine Alkylgruppe mit 1 bis 4 Kohlenstoffatomen bedeutet, Z ein Wasserstoffatom, Halogenatom oder eine Alkylgruppe mit 1 bis 4 Kohlenstoffatomen bedeutet, und p eine ganze Zahl von 1 bis 5 ist.

12. Geformter und elektrochemisch beschichteter Gegenstand nach Anspruch 1, wobei die Mengen des aromatischen Vinylmonomeren und der heterocyclischen Verbindung, die zur Herstellung des Pfropfcopolymeren (c-2) verwendet werden, 30 bis 90 Gew.-% bzw. 10 bis 50 Gew.-% betragen, bezogen auf die Gesamtmenge der auf das kautschukartige Polymer vom Butadien-Typ zu pfropfenden Monomeren.

13. Geformter und elektrochemisch beschichteter Gegenstand nach Anspruch 12, wobei das Pfropfcopolymer (c-2) durch Polymerisieren von zuerst der heterocyclischen Verbindung und danach des aromatischen Vinylmonomeren erhalten wird.

14. Geformter und elektrochemisch beschichteter Gegenstand nach Anspruch 1, wobei die Menge des Pfropfcopolymeren (C) 15 bis 50 Gew.-Teile pro 100 Gew.-Teile der Summe aus den drei Komponenten (A), (B) und (C) beträgt.

## Revendications

1. Article moulé et plaqué, moulé à partir d'une composition de résine thermoplastique comprenant (A) 10 à 60 parties en poids d'une résine de poly(éther de phénylène), (B) 20 à 70 parties en poids d'au moins un composant choisi parmi (b-1) une résine vinylique aromatique et (b-2) un copolymère d'un monomère vinylique aromatique avec un composé hétérocyclique ayant un groupe vinyle et contenant de l'azote comme hétéroatome et (C) 10 à 60 parties en poids d'au moins un copolymère greffé choisi parmi (c-1) un copolymère greffé obtenu par polymérisation d'un monomère vinylique aromatique, éventuellement avec un autre monomère vinylique qui lui est copolymérisable, en présence d'un polymère caoutchouc de type butadiène et (c-2) un copolymère greffé obtenu par polymérisation d'un monomère vinylique aromatique et d'un composé hétérocyclique ayant un groupe vinyle et contenant de l'azote comme hétéroatome, éventuellement avec un autre composé à insaturation éthylénique qui lui est copolymérisable, en présence d'un polymère caoutchouc de type butadiène, où au moins un des composants (B) et (C) est un polymère du composé hétérocyclique azoté et la quantité totale des composants (A), (B) et (C) est de 100 parties en poids.

2. Article moulé et plaqué selon la revendication 1, où la résine de poly(éther de phénylène) est un polymère choisi parmi un polymère ayant des motifs récurrents représentés par la formule générale suivante : 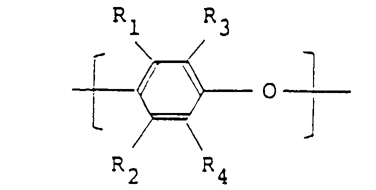 dans laquelle R₁, R₂, R₃ et R₄, qui peuvent être identiques ou différents, représentent un groupe alkyle ayant 1 à 4 atomes de carbone, à l'exclusion d'un groupe tert-butyle, un groupe aryle ayant 6 à 10 atomes de carbone, un atome d'halogène, un atome d'hydrogène, un groupe nitro ou un groupe amino,
et un poly(éther de phénylène) greffé avec du styrène.

3. Article moulé et plaqué selon la revendication 1, où la quantité de la résine de poly(éther de phénylène) (A) est de 20 à 45 parties en poids pour 100 parties en poids de la somme des trois composants (A), (B) et (C).

4. Article moulé et plaqué selon la revendication 1, où le copolymère greffé (C) est le copolymère greffé (c-2) comprenant le composé hétérocyclique azoté.

5. Article moulé et plaqué selon la revendication 1, où la résine vinylique aromatique (B) est la résine vinylique aromatique (b-1) dépourvue du composé hétérocyclique azoté et le copolymère greffé (C) est le copolymère greffé (c-2), comprenant le composé hétérocyclique azoté.

6. Article moulé et plaqué selon la revendication 1, où la résine vinylique aromatique (b-1) est un polymère ayant des motifs récurrents représentés par la formule suivante : 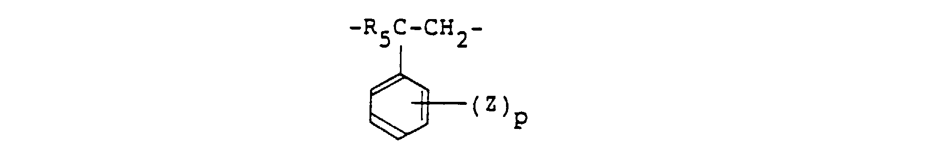 dans laquelle R₅ représente un atome d'hydrogène ou un groupe alkyle ayant 1 à 4 atomes de carbone, Z représente un atome d'hydrogène, un atome d'halogène ou un groupe alkyle ayant 1 à 4 atomes de carbone, et p est un entier de 1 à 5.

7. Article moulé et plaqué selon la revendication 1, où le copolymère (b-2) est un copolymère de 65 à 95 % en poids d'un monomère vinylique aromatique représenté par la formule : 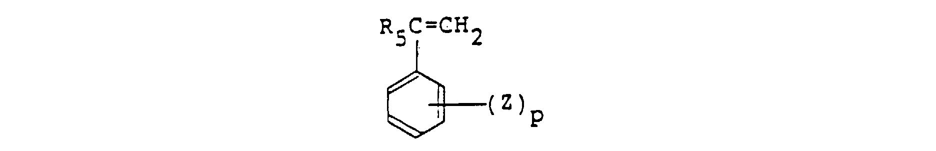 dans laquelle R₅ représente un atome d'hydrogène ou un groupe alkyle ayant 1 à 4 atomes de carbone, Z représente un atome d'hydrogène, un atome d'halogène ou un groupe alkyle ayant 1 à 4 atomes de carbone, et p est un entier de 1 à 5,
avec 5 à 35 % en poids d'un composé hétérocyclique choisi parmi la vinylpyridine, le vinylimidazole, la vinylquinoléine et la vinylpyrazine.

8. Article moulé et plaqué selon la revendication 1, où la quantité du composant (B) est de 30 à 60 parties en poids pour 100 parties en poids de la somme des trois composants (A), (B) et (C).

9. Article moulé et plaqué selon la revendication 1, où le polymère caoutchouc de type butadiène utilisé pour la préparation du copolymère greffé (C) est un copolymère d'au moins 50 % en poids de butadiène et de pas plus de 50 % en poids d'un monomère à insaturation éthylénique ou d'un organosiloxane.

10. Article moulé et plaqué selon la revendication 1, où la proportion du polymère caoutchouc de type butadiène est d'au moins 30 % en poids relativement au poids du copolymère greffé (C).

11. Article moulé et plaqué selon la revendication 1, où le monomère vinylique aromatique utilisé pour la préparation du copolymère greffé (C) est représenté par la formule : 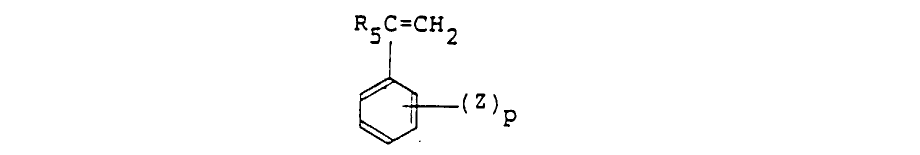 dans laquelle R₅ représente un atome d'hydrogène ou un groupe alkyle ayant 1 à 4 atomes de carbone, Z représente un atome d'hydrogène, un atome d'halogène ou un groupe alkyle ayant 1 à 4 atomes de carbone, et p est un entier de 1 à 5.

12. Article moulé et plaqué selon la revendication 1, où les proportions du monomère vinylique aromatique et du composé hétérocyclique utilisées pour la préparation du copolymère greffé (c-2) sont respectivement de 30 à 90 % en poids et de 10 à 50 % en poids relativement à la quantité totale des monomères à greffer sur le polymère caoutchouc de type butadiène.

13. Article moulé et plaqué selon la revendication 12, où le copolymère greffé (c-2) est obtenu par polymérisation d'abord du composé hétérocyclique, puis du monomère vinylique aromatique.

14. Article moulé et plaqué selon la revendication 1, où la quantité du copolymère greffé (C) est de 15 à 50 parties en poids pour 100 parties en poids de la somme de trois composants (A), (B) et (C).
